# EUROPEAN PATENT APPLICATION

(11) **EP 4 364 870 A1**
(43) Date of publication of application: **08.05.2024**
(21) Application number: 23206614.2
(22) Date of filing: 30.10.2023
(51) Int. Cl.: B22F 5/00, B22F 5/10, B22F 10/14, B33Y 10/00, B33Y 80/00, C22C 1/04, C22C 27/06, C22C 33/02, C22C 38/28, H01M 8/0202, H01M 8/0208, H01M 8/0254, H01M 8/026, B22F 3/24, H01M 8/021

(54) **BINDER JET PRINTING OF METALLIC INTERCONNECT FOR SOLID OXIDE ELECTROCHEMICAL CELL STACK**

(30) Priority: 01.11.2022 US 202263381877 P
(71) Applicant: Bloom Energy Corporation, San Jose, CA 95134 (US)
(72) Inventor: BYRD, Adam, San Jose, 95134 (US)
(74) Representative: Wichmann, Hendrik

(57) **Abstract**

A method includes binder jet printing a metal alloy powder or a metal powder mixture to form a green interconnect, debinding the green interconnect, and sintering the green interconnect to form a metal alloy interconnect for an electrochemical stack.

## Description

### FIELD

The present invention is directed to electrochemical cell interconnect manufacturing methods, and specifically to methods of binder jet printing electrochemical cell interconnects.

### BACKGROUND

A typical solid oxide fuel cell stack includes multiple solid oxide fuel cells separated by metallic interconnects that provide both electrical connection between adjacent cells in the stack and channels for delivery and removal of a fuel and an oxidant.

### SUMMARY

According to various embodiments, a method includes binder jet printing a metal alloy powder or a metal powder mixture to form a green interconnect, debinding the green interconnect, and sintering the green interconnect to form a metal alloy interconnect for an electrochemical stack.

### BRIEF DESCRIPTION OF THE DRAWINGS

FIG. 1A is a perspective view of a SOFC stack, according to various embodiments of the present disclosure.
FIG. 1B is a cross-sectional view of a portion of the stack of FIG. 1A.
FIG. 2A is a plan view of an air side of an interconnect, according to various embodiments of the present disclosure.
FIG. 2B is a plan view of a fuel side of the interconnect of FIG. 2A.
FIG. 2C is a plan view of an air side of another interconnect, according to alternative embodiments of the present disclosure.
FIG. 2D is a plan view of a fuel side of the interconnect of FIG. 2C.
FIG. 3A is a plan view of an air side of a fuel cell, according to various embodiments of the present disclosure.
FIG. 3B is a plan view of a fuel side of the fuel cell of FIG. 3A.
FIG. 4 is a cross-sectional view of an interconnect, according to an alternative embodiment of the present disclosure.
FIGS. 5A - 5D are schematic diagrams of steps in a method of binder jet printing interconnects, according to various embodiments of the present disclosure.
FIG. 6 is a block diagram of method step that occur after the binder jet printing, according to various embodiments of the present disclosure.

### DETAILED DESCRIPTION

The various embodiments will be described in detail with reference to the accompanying drawings. Wherever possible, the same reference numbers will be used throughout the drawings to refer to the same or like parts. References made to particular examples and implementations are for illustrative purposes and are not intended to limit the scope of the invention or the claims.

It will be understood that when an element or layer is referred to as being "on" or "connected to" another element or layer, it can be directly on or directly connected to the other element or layer, or intervening elements or layers may be present. In contrast, when an element is referred to as being "directly on" or "directly connected to" another element or layer, there are no intervening elements or layers present. It will be understood that for the purposes of this disclosure, "at least one of X, Y, and Z" can be construed as X only, Y only, Z only, or any combination of two or more items X, Y, and Z (e.g., XYZ, XYY, YZ, ZZ).

Where a range of values is provided, it is understood that each intervening value between the upper and lower limit of that range and any other stated or intervening value in that stated range is encompassed within the invention. It will also be understood that the term "about" may refer to a minor measurement errors of, for example, 5 to 10%.

Words such as "thereafter," "then," "next," etc. are not necessarily intended to limit the order of the steps; these words may be used to guide the reader through the description of the methods. Further, any reference to claim elements in the singular, for example, using the articles "a," "an" or "the" is not to be construed as limiting the element to the singular.

The term "fuel cell stack," as used herein, means a plurality of stacked fuel cells that can optionally share a common fuel inlet and exhaust passages or risers.

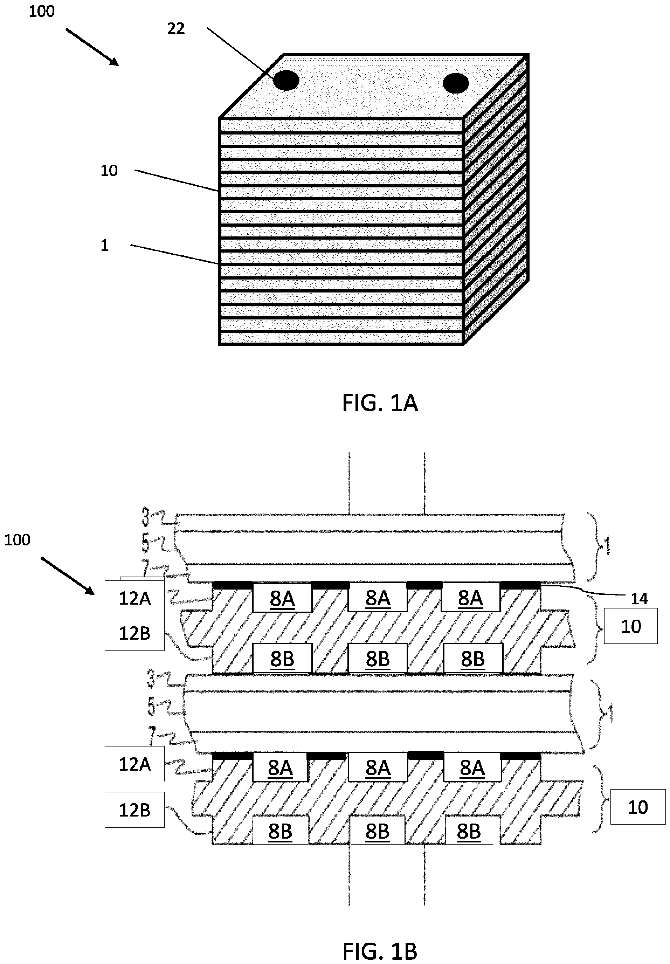

FIG. 1A is a perspective view of a fuel cell stack 100, and FIG. 1B is a sectional view of a portion of the stack 100, according to various embodiments of the present disclosure. Referring to FIGS. 1A and 1B, the stack 100 may be a solid oxide fuel cell (SOFC) stack that includes fuel cells 1 separated by interconnects 10. Referring to FIG. 1B, each fuel cell 1 comprises a cathode 3, a solid oxide electrolyte 5, and an anode 7.

Various materials may be used for the cathode 3, electrolyte 5, and anode 7. For example, the anode 7 may comprise a cermet layer comprising a nickel containing phase and a ceramic phase. The nickel containing phase may consist entirely of nickel in a reduced state. This phase may form nickel oxide when it is in an oxidized state. Thus, the anode 7 is preferably annealed in a reducing atmosphere prior to operation to reduce the nickel oxide to nickel. The nickel containing phase may include other metals in additional to nickel and/or nickel alloys. The ceramic phase may comprise a stabilized zirconia, such as yttria and/or scandia stabilized zirconia and/or a doped ceria, such as gadolinia, yttria and/or samaria doped ceria.

The electrolyte 5 may comprise a stabilized zirconia, such as scandia stabilized zirconia (SSZ), scandia and ceria stabilized zirconia, scandia, ceria and ytterbia stabilized zirconia, or yttria stabilized zirconia (YSZ). Alternatively, the electrolyte 5 may comprise another ionically conductive material, such as a doped ceria.

The cathode 3 may comprise a layer of an electrically conductive material, such as an electrically conductive perovskite material, such as lanthanum strontium manganite (LSM). Other conductive perovskites, such as LSCo, etc., or metals, such as Pt, may also be used. The cathode 3 may also contain a ceramic phase similar to the anode 7. The electrodes and the electrolyte may each comprise one or more sublayers of one or more of the above described materials.

Fuel cell stacks are frequently built from a multiplicity of fuel cells 1 in the form of planar elements, tubes, or other geometries. Although the fuel cell stack 100 in FIG. 1 is vertically oriented, fuel cell stacks may be oriented horizontally or in any other direction. Fuel and air may be provided to the electrochemically active surface, which can be large. For example, fuel may be provided through fuel conduits 22 (e.g., fuel riser openings) formed in each interconnect 10 and fuel cell 1, while air may be provided from the side of the stack between air side ribs of the interconnects 10.

Each interconnect 10 electrically connects adjacent fuel cells 1 in the stack 100. In particular, an interconnect 10 may electrically connect the anode 7 of one fuel cell 1 to the cathode 3 of an adjacent fuel cell 1. FIG. 1B shows that the lower fuel cell 1 is located between two interconnects 10. A Ni mesh (not shown) may be used to electrically connect the interconnect 10 to the anode 7 of an adjacent fuel cell 1.

Each interconnect 10 includes fuel-side ribs 12A that at least partially define fuel channels 8A and air-side ribs 12B that at least partially define oxidant (e.g., air) channels 8B. The interconnect 10 may operate as a gas-fuel separator that separates a fuel, such as a hydrocarbon fuel, flowing to the fuel electrode (i.e. anode 7) of one cell in the stack from oxidant, such as air, flowing to the air electrode (i.e. cathode 3) of an adjacent cell in the stack. At either end of the stack 100, there may be an air end plate or fuel end plate (not shown) for providing air or fuel, respectively, to the end electrode.

Each interconnect 10 may be made of or may contain electrically conductive material, such as a metal alloy (e.g., chromium-iron alloy) which has a similar coefficient of thermal expansion (CTE) to that of the solid oxide electrolyte in the cells (e.g., a CTE difference of 0-10%). For example, the interconnects 10 may comprise a metal (e.g., a chromium-iron alloy), such as 4-6 weight percent iron (e.g., 5 weight percent iron), optionally 1 or less weight percent yttrium, and balance chromium, and may electrically connect the anode or fuel-side of one fuel cell 1 to the cathode or air-side of an adjacent fuel cell 1. If the interconnect 10 comprises a chromium-iron alloy, then iron rich regions 14 may be formed at the top of the fuel-side ribs 12A. An electrically conductive contact layer, such as a nickel contact layer, may be provided between anodes 7 and each interconnect 10. Another optional electrically conductive contact layer may be provided between the cathodes 3 and each interconnect 10.

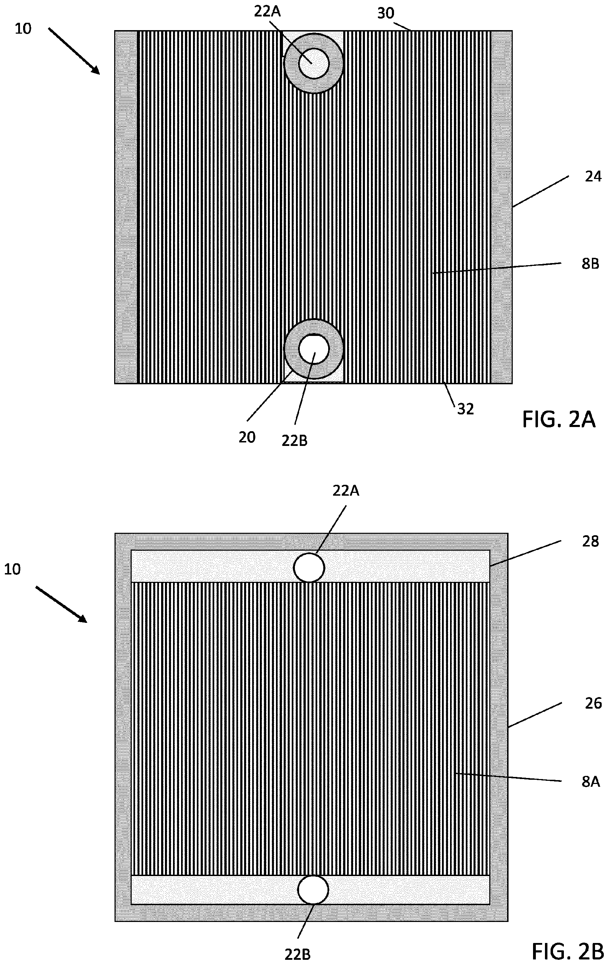

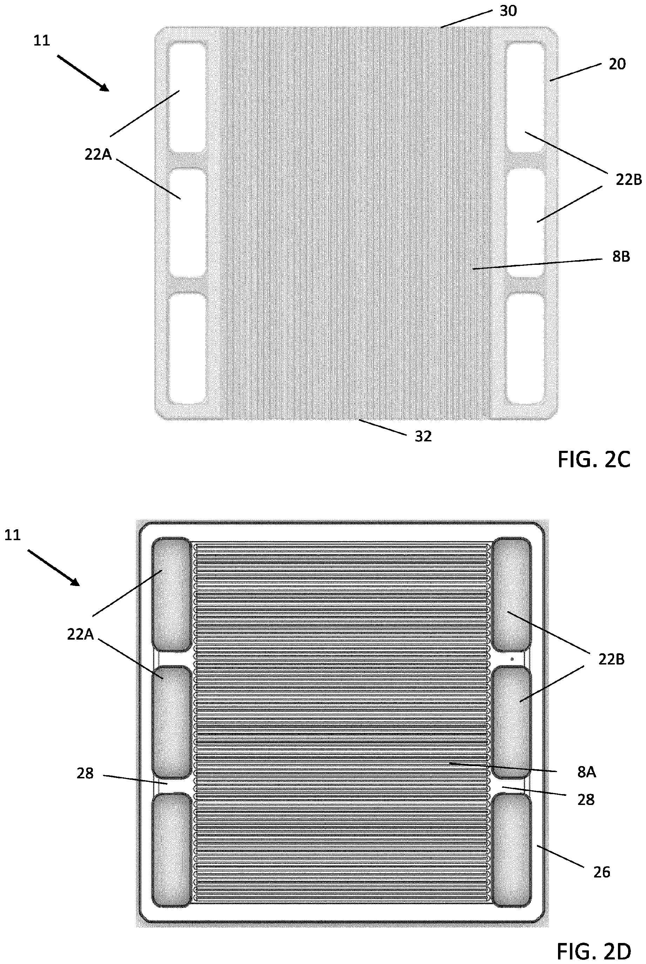

FIG. 2A is a top view of the air side of the interconnect 10, and FIG. 2B is a top view of a fuel side of the interconnect 10, according to various embodiments of the present disclosure. FIG. 2C is a top view of the air side of an alternative interconnect 11, and FIG. 2D is a top view of a fuel side of the alternative interconnect 11, according to alternative embodiments of the present disclosure. Referring to FIGS. 1B, 2A and 2C, the air side of the interconnect includes the air channels 8B that extend from opposing first and second edges 30, 32 of the interconnects 10 and 11. Interconnect 10 is a counter-flow or co-flow interconnect in which air and fuel flow in parallel directions. Interconnect 10 may have one fuel inlet hole 22A and one fuel outlet hole 22B. Interconnect 11 is a cross-flow interconnect in which air and fuel flow in perpendicular directions. Interconnect 11 may have plural (e.g., two, three or more) fuel inlet holes 22A and plural fuel outlet holes 22B. Air flows through the air channels 8B to a cathode 3 of an adjacent fuel cell 1. Ring seals 20 may surround fuel inlet and outlet holes (which form parts of respective fuel inlet and outlet risers) 22A, 22B of the interconnects 10, 11, to prevent fuel from contacting the cathode. Strip-shaped peripheral seals 24 are located on peripheral portions of the air side of the interconnect 10. The seals 20, 24 may be formed of a glass or glass-ceramic material. The peripheral portions of the interconnect may be elevated plateaus which do not include ribs or channels. The surface of the peripheral regions may be coplanar with tops of the ribs 12B (FIG. 1B).

Referring to FIGS. 1B, 2B and 2D, the fuel side of the interconnects 10 and 11 may include the fuel channels 8A and fuel manifolds 28. In interconnect 10, fuel flows from the fuel inlet hole 22A, which form part of the fuel inlet riser, into the adjacent manifold 28, through the fuel channels 8A, and to an anode 7 of an adjacent fuel cell 1. Excess fuel and reaction byproducts may flow into the other fuel manifold 28 and then into the fuel outlet hole 22B. The manifolds 28 may be omitted in interconnect 11. A frame seal 26 is disposed on a peripheral region of the fuel side of the interconnects 10 and 11. The peripheral region may be an elevated plateau which does not include ribs or channels. The surface of the peripheral region may be coplanar with tops of the ribs 12A.

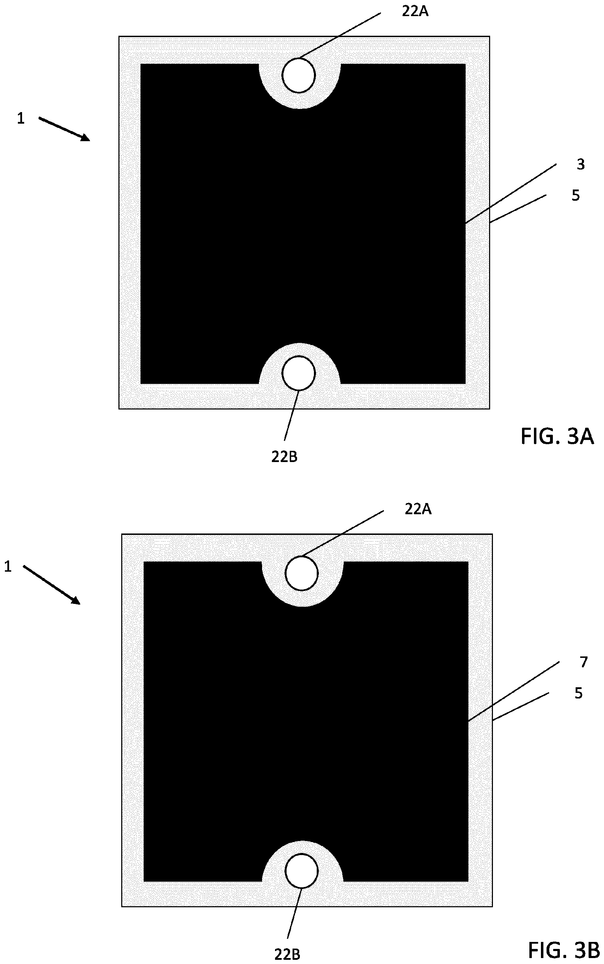

FIG. 3A is a plan view of a cathode side (e.g., air side) of the fuel cell 1, and FIG. 3B is a plan view of an anode side (e.g., fuel side) of the fuel cell 1, according to various embodiments of the present disclosure. Referring to FIGS. 1A, 2A, 3A, and 3B, the fuel cell 1 may include an inlet fuel hole 22A, an outlet fuel hole 22B, the electrolyte 5, and the cathode 3. The cathode 3 may be disposed on a first side of the electrolyte 5. The anode 7 may be disposed on an opposing second side of the electrolyte 5.

The fuel holes 22A, 22B may extend through the electrolyte 5 and may be arranged to overlap with the fuel holes 22A, 22B of the interconnects 10, when assembled in the fuel cell stack 100. The cathode 3 may be printed on the electrolyte 5 so as not to overlap with the ring seals 20 and the peripheral seals 24 when assembled in the fuel cell stack 100. The anode 7 may have a similar shape as the cathode 3. The anode 7 may be disposed so as not to overlap with the frame seal 26, when assembled in the stack 100. In other words, the cathode 3 and the anode 7 may be recessed from the edges of the electrolyte 5, such that corresponding edge regions of the electrolyte 5 may directly contact the corresponding seals 20, 24, 26. In the alternative embodiment which uses the cross-flow interconnect 11, the fuel holes 22A, 22B and thus the fuel risers may extend outside the fuel cell 1.

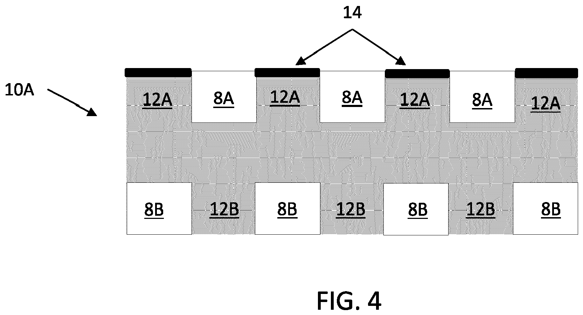

FIG. 4 is a cross-sectional view of an interconnect 10A, according to an alternative embodiment of the present disclosure. The interconnect 10A is similar to the interconnect 10 of FIGS 1B, 2A and 2B, so only the differences therebetween will be discussed in detail.

Referring to FIG. 4, the interconnect 10A includes fuel-side ribs 12A that at least partially define fuel channels 8A, and air-side ribs 12B that at least partially define oxidant air channels 8B. However, unlike the interconnect 10, the channels 8A and 8B are laterally offset from each other, and the ribs 12A and 12B are laterally offset from each other (i.e., staggered in the lateral direction). As such, the overall thickness of the interconnect 10A may be reduced.

In addition, iron rich regions 14 may be included at the tips of the fuel-side ribs 12A. In other embodiments, the iron rich regions 14 may also be included on the walls of the fuel channels 8A. The iron-rich regions 14 may have greater than 10 wt.% iron, such as 15-99 wt.% iron, such as 25-75 wt.% iron, optionally 0 to 1 wt.% Y, and balance chromium. The regions 14 may operate to reduce area specific resistance degradation ("ASRD") between the interconnect 10A and an adjacent anode.

### Interconnect Binder Jet Printing

Conventionally, Cr-Fe alloy fuel cell interconnects are formed using a powder metallurgy process. For example, pure Cr and Fe powders are blended along with a binder and then powder pressed into the shape of an interconnect. This powder pressed part is then sintered in a hydrogen atmosphere at a high temperature for several hours, followed by oxidation at a high temperature. Using such a process in a single powder press apparatus, less than ten interconnects may be powder pressed every minute.

The total manufacturing line capital costs of such a powder pressing system are high. In addition, due to the low compressibility of Cr-Fe powder, tooling and operating costs per line may also be very high. For example, pressing may require the use of very large presses, in conjunction with high tooling costs, due to frequent required refacing of tooling. In addition, high-temperature hydrogen sintering is also an expensive process. Due to such high capital costs and high operating costs, interconnect production cost reduction remains difficult to achieve using powder metallurgy. In addition, conventional powder metallurgy processes may produce interconnects that suffer from density variations, due to the cross-sectional thickness variations produced during the pressing process. Such variations may also result in interconnect warping after sintering.

In addition, pressing and sintering alone may not be sufficient to make a dense, gas-tight Cr-Fe SOFC interconnect, necessitating further interconnect oxidation to block internal porosity in the alloy with chromium oxide which fills the internal porosity, followed by grit blasting to remove the chromium oxide from the surface of the interconnect before the interconnect is placed into an electrochemical cell stack.

Accordingly, various embodiments provide a binder jet printing process for forming electrochemical cell interconnects, such as interconnects for SOFC stacks or solid oxide electrolyzer cell (SOEC) stacks. SOFC stacks may be used in fuel cell systems to generate electricity. SOEC stacks may be used in electrolyzer systems to produce hydrogen and/or oxygen through electrolysis. In particular, the method may include using binder jet printing and sintering to form an electrochemical cell (e.g., fuel cell or electrolyzer cell) interconnect from a pre-alloyed metal powder or a mixture (i.e., blend) of elemental powders.

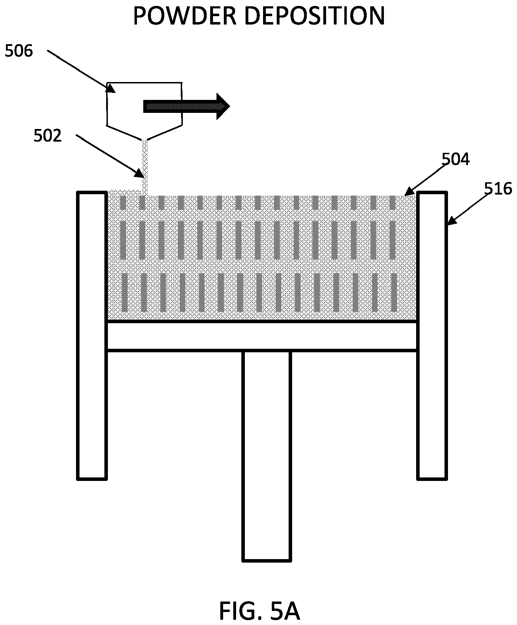

FIGS. 5A-5D are schematic diagrams of method steps for binder jet printing an interconnect, according to various embodiments of the present disclosure. In various embodiments, as shown in FIGS. 5A-5D, the binder jet printing replaces the powder pressing (e.g., cold pressing process) and operates in a low-temperature regime prior to metal sintering of the interconnect. As such, the high temperature interconnect oxidation and grit blast steps are no longer required and may be omitted.

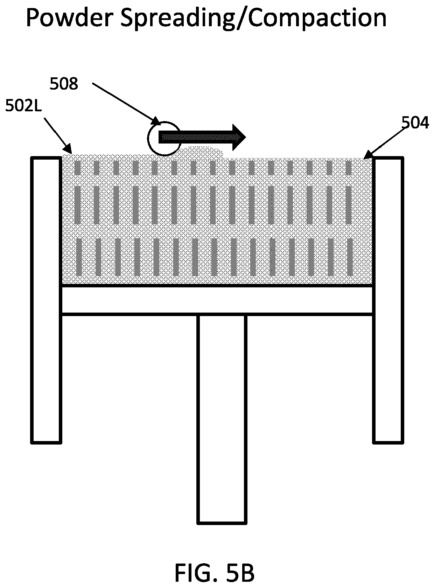

As shown in FIG. 5A, in a powder deposition step, a metal alloy powder, such as pre-alloyed metal powder or a mixture of elemental powders 502, may be first deposited on a printer bed (e.g., a platform) 504 from a powder container 506 (e.g., a powder shoe or another suitable container). In one embodiment, the metal alloy powder may comprise chromium pre-alloyed with iron (e.g., 4 to 6 weight percent iron and 94 to 96 weight percent Cr). Other pre-alloyed powders, such as a ferritic stainless steel powder (e.g., steel powder containing at least 10.5 wt.% Cr and at least 50 wt.% Fe, such as 11 to 30 wt.% Cr and 70 to 89 wt. % Fe), for example Crofer 22 powder, may be used. As shown in FIG. 5B, in a powder spreading and/or compaction step, the pre-alloyed metal powder or a mixture of elemental powders 502 may be then spread and/or compacted on the printer bed 504 by a compaction tool 508 (e.g. a roller, a blade, etc.) to obtain a pre-alloyed metal layer 502L.

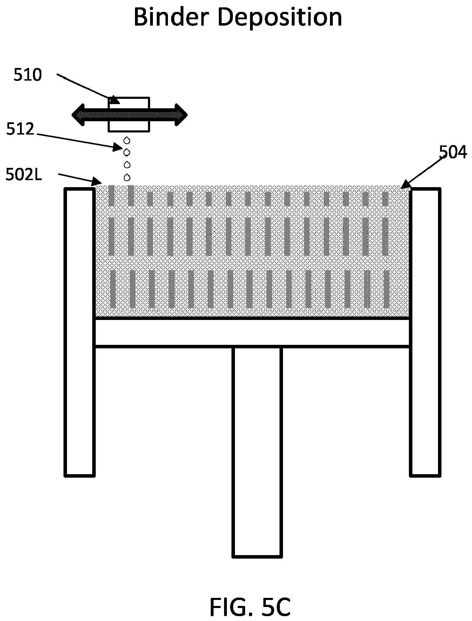

Subsequently, as shown in FIG. 5C, in a binder deposition step, an inkjet printhead 510 may be used to deposit a binder 512 in a specific pattern on the pre-alloyed metal layer 502L. The inkjet printhead 510 may be mounted on a computer-controlled carriage which moves along the printer bed 504 in a predetermined pattern. The inkjet printhead 510 deposits binder 512 drops only in areas of the pre-alloyed metal layer 502L that will be included in the final interconnect. The binder 512 may comprise an organic or aqueous solvent containing organic binder material. The binder may act as a glue to attach the powder particles together in the area where the binder drops are deposited and may also act as a carrier for the powder particles.

In some embodiments that use a polymer in a solvent type binder, after deposition on the metal layer, the binder may be dried in a drying step to evaporate the solvent. In other embodiments that use a reactive binder, the drying step may be omitted and the binder polymerizes and solidifies without a drying step.

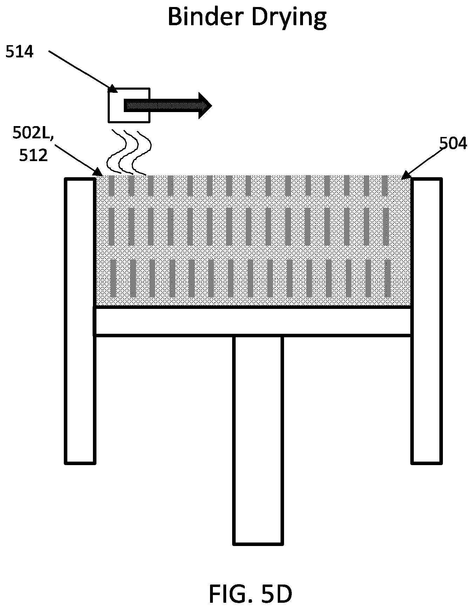

For example, as shown in FIG. 5D, in a drying step, after the binder 512 pattern on the metal layer 502L is complete, the binder is dried using a dryer (e.g., a heater) 514 to evaporate the solvent from the binder 512. For example, the heater may move along the printer bed 504 to dry the binder 512. This completes one layer of the interconnect.

The binder jet process of FIGS. 5A - 5D is then repeated multiple times to build up the interconnect layer by layer until the green interconnect is complete. For example, additional pre-alloyed powder is deposited on the metal layer 502L with the dried binder, as described above with respect to FIG. 5A. Once all of the layers of the green interconnect are completed, the excess powder which has not been glued together by the binder 512 is removed by an air blower or another removal method. In some embodiments, the green interconnect may be subjected to a separate thermal curing step prior to removal of the excess powder. FIGS. 5A - 5D illustrate binder jet processes of one embodiment in which a single inkjet printhead 510 and single heater 514 are used to print multiple interconnects. The inkjet printhead 510 may span the entire width of the build box 516 and move back and forth in one direction, or may raster in two dimensions to deposit the binder pattern 512 across the printer bed 504 surface. A single heater 514 may span the entire printer bed 504. While the binder jet processes of FIGS. 5A - 5D have been illustrated with one inkjet printhead 510 and one heater 514, those skilled in the art will recognize that multiple printheads and heaters may be used simultaneously in a binder jet process to in increase the throughput of the binder jet process.

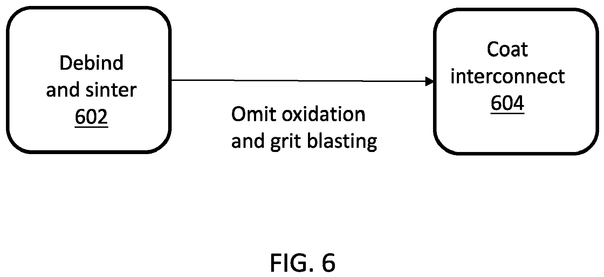

FIG. 6 is a block diagram of a process of sintering after binder jet printing for forming the interconnect, according to various embodiments of the present disclosure. Once the binder jet printing of the green interconnect is complete, the organic binder can be removed (i.e., volatized and/or decomposed into a variety of compounds) from the green interconnect by a debinding thermal treatment in a furnace. The debinding thermal treatment is then followed by sintering at a higher temperature in a combined heat treatment in step 602 to ultimately form the final interconnect.

In various embodiments, the sintering process may be pressureless (i.e., conducted without external pressure applied to the powder particles) by using smaller powder particles. Pressureless sintering may allow the densification of the matrix of Cr-Fe alloy to approximately 100% of theoretical density without application of any external pressure (other than that used to spread the powder 502 on the printer bed 504). Pressureless sintering may eliminate the need for interconnect oxidation and grit blasting steps and can be applicable to additive manufacture of ferritic stainless steel interconnects as well, such as VDM^{®} Crofer 22 APU interconnects which contain 20 to 24 wt.% Cr, 0.3 to 0.8 wt.% Mn, 0.04 to 0.2 wt.% La, 0.03 to 0.2 wt.% Ti and balance iron and various impurities (e.g., unavoidable impurities). Thus, the interconnect may comprise a ferritic stainless steel interconnect containing at least 10.5 wt.% Cr and at least 50 wt.% Fe, such as 11 to 30 wt.% Cr and 70 to 89 wt. % Fe.

The elimination of oxidation and grit blast steps simplifies interconnect production. The lack of internal metal oxide may also increase the thermal conductivity of the fuel cell interconnect.

In step 604, a surface of the interconnect that in operation is exposed to an oxidizing environment (e.g., air) in an electrochemical stack, such as the cathode-facing side of the interconnect, may be coated with a protective coating layer in order to decrease the growth rate of a chromium oxide surface layer on the interconnect and to suppress evaporation of chromium vapor species which can poison the fuel cell cathode. Typically, the coating layer, which can comprise a perovskite such as lanthanum strontium manganite (LSM), may be formed using a spray coating or dip coating process. Alternatively, other metal oxide coatings, such as a spinel, such as an (Mn, Co)₃O₄ spinel (MCO), can be used instead of or in addition to LSM. Any spinel having the composition Mn₂₋ₓCo₁₊ₓO₄ (0 ≤ x ≤ 1) or written as z(Mn₃O₄) + (1-z)(Co₃O₄), where (1/3 ≤ z ≤ 2/3) or written as (Mn, Co)₃O₄ may be used. In other embodiments, a mixed layer of LSM and MCO, or a stack of LSM and MCO layers may be used as the coating layer.

Fuel cell systems which contain the interconnects of the embodiments of the present disclosure are designed to reduce greenhouse gas emissions and have a positive impact on the climate.

Although the foregoing refers to particular preferred embodiments, it will be understood that the invention is not so limited. It will occur to those of ordinary skill in the art that various modifications may be made to the disclosed embodiments and that such modifications are intended to be within the scope of the invention. All of the publications, patent applications and patents cited herein are incorporated herein by reference in their entirety.

**The invention also refers to the following embodiments, wherein the term "claim" means "embodiment":**
1. A method, comprising:
   binder jet printing a metal alloy powder or a metal powder mixture to form a green interconnect;
   debinding the green interconnect; and
   sintering the green interconnect to form a metal alloy interconnect for an electrochemical stack.
2. The method of claim 1, wherein the binder jet printing comprises:
   depositing a metal alloy powder on a printer bed;
   depositing a binder on the metal alloy powder in a predetermined pattern;
   drying the binder; and
   repeating the steps of depositing the metal alloy powder, depositing the binder and drying a plurality of times.
3. The method of claim 2, wherein the binder jet printing further comprises spreading the deposited metal alloy powder on the printer bed to form a metal alloy powder layer.
4. The method of claim 3, wherein the binder is deposited on the metal alloy powder layer in the predetermined pattern using an inkjet printhead.
5. The method of claim 1, wherein the metal alloy powder or metal powder mixture comprises a pre-alloyed chromium iron alloy powder containing chromium and iron in the following percentages based on the total weight of the powder:
   from about 4 wt.% to about 6 wt.% Fe; and
   from about 94 wt.% to about 96 wt.% Cr.
6. The method of claim 1, wherein the metal alloy interconnect comprises:
   a fuel side comprising fuel-side ribs that at least partially define fuel channels; and
   an air side comprising air-side ribs that at least partially define air channels.
7. The method of claim 6, wherein the metal alloy interconnect further comprises at least one fuel inlet hole and at least one fuel outlet hole.
8. The method of claim 1, further comprising placing the metal alloy interconnect into an electrochemical stack.
9. The method of claim 8, wherein the electrochemical stack comprises a solid oxide fuel cell stack.
10. The method of claim 9, further comprising placing the solid oxide fuel cell stack into a fuel cell system.
11. The method of claim 8, wherein the electrochemical stack comprises a solid oxide electrolyzer cell stack.
12. The method of claim 11, further comprising placing the solid oxide electrolyzer cell stack into an electrolyzer system.
13. The method of claim 1, wherein the metal alloy powder or metal powder mixture comprises a ferritic alloy.
14. The method of claim 13, wherein the ferritic alloy comprises a ferritic stainless steel.
15. The method of claim 14, wherein the ferritic stainless steel contains 11 to 30 wt.% Cr and 70 to 89 wt.% Fe.
16. The method of claim 14, wherein the ferritic stainless steel contains 20 to 24 wt.% Cr, 0.3 to 0.8 wt.% Mn, 0.04 to 0.2 wt.% La, 0.03 to 0.2 wt.% Ti and balance iron and impurities.
17. The method of claim 1, wherein the metal alloy interconnect comprises a ferritic stainless steel interconnect.
18. The method of claim 17, wherein the ferritic stainless steel interconnect contains at least 10.5 wt.% Cr and at least 50 wt.% Fe.
19. The method of claim 18, wherein the ferritic stainless steel interconnect contains 11 to 30 wt.% Cr and at 70 to 89 wt.% Fe.
20. The method of claim 19, wherein the ferritic stainless steel interconnect contains 20 to 24 wt.% Cr, 0.3 to 0.8 wt.% Mn, 0.04 to 0.2 wt.% La, 0.03 to 0.2 wt.% Ti and balance iron and impurities.

## Claims

1. A method, comprising:
binder jet printing a metal alloy powder or a metal powder mixture to form a green interconnect;
debinding the green interconnect; and
sintering the green interconnect to form a metal alloy interconnect for an electrochemical stack.

2. The method of claim 1, wherein the binder jet printing comprises:
depositing a metal alloy powder on a printer bed;
depositing a binder on the metal alloy powder in a predetermined pattern;
drying the binder; and
repeating the steps of depositing the metal alloy powder, depositing the binder and drying a plurality of times.

3. The method of claim 2, wherein:
the binder jet printing further comprises spreading the deposited metal alloy powder on the printer bed to form a metal alloy powder layer; and
the binder is deposited on the metal alloy powder layer in the predetermined pattern using an inkjet printhead.

4. The method of claim 1, wherein the metal alloy powder or metal powder mixture comprises a pre-alloyed chromium iron alloy powder containing chromium and iron in the following percentages based on the total weight of the powder:
from about 4 wt.% to about 6 wt.% Fe; and
from about 94 wt.% to about 96 wt.% Cr.

5. The method of claim 1, wherein the metal alloy interconnect comprises:
a fuel side comprising fuel-side ribs that at least partially define fuel channels;
an air side comprising air-side ribs that at least partially define air channels; and
at least one fuel inlet hole and at least one fuel outlet hole.

6. The method of claim 1, further comprising placing the metal alloy interconnect into an electrochemical stack.

7. The method of claim 6, wherein the electrochemical stack comprises a solid oxide fuel cell stack, and further comprising placing the solid oxide fuel cell stack into a fuel cell system.

8. The method of claim 6, wherein the electrochemical stack comprises a solid oxide electrolyzer cell stack, and further comprising placing the solid oxide electrolyzer cell stack into an electrolyzer system.

9. The method of claim 1, wherein the metal alloy powder or metal powder mixture comprises a ferritic alloy.

10. The method of claim 9, wherein the ferritic alloy comprises a ferritic stainless steel.

11. The method of claim 10, wherein the ferritic stainless steel contains 11 to 30 wt.% Cr and 70 to 89 wt.% Fe.

12. The method of claim 10, wherein the ferritic stainless steel contains 20 to 24 wt.% Cr, 0.3 to 0.8 wt.% Mn, 0.04 to 0.2 wt.% La, 0.03 to 0.2 wt.% Ti and balance iron and impurities.

13. The method of claim 1, wherein the metal alloy interconnect comprises a ferritic stainless steel interconnect.

14. The method of claim 13, wherein the ferritic stainless steel interconnect contains at least 10.5 wt.% Cr and at least 50 wt.% Fe.

15. The method of claim 14, wherein the ferritic stainless steel interconnect contains 20 to 24 wt.% Cr, 0.3 to 0.8 wt.% Mn, 0.04 to 0.2 wt.% La, 0.03 to 0.2 wt.% Ti and balance iron and impurities.
